# EUROPEAN PATENT APPLICATION

(11) **EP 2 008 943 A1**
(43) Date of publication of application: **31.12.2008**
(21) Application number: 07425391.5
(22) Date of filing: 26.06.2007
(51) Int. Cl.: B65D 43/02, A47J 36/06

(54) **Flexible cover sealed against atmospheric agents and related process for using it**

(71) Applicant: Tosini, Giorgio, 24060 Credaro (BG) (IT)
(72) Inventor: Tosini, Giorgio, 24060 Credaro (BG) (IT); Nani, Roberto, 24020 Ranica (BG) (IT)
(74) Representative: Garavelli, Paolo

(57) **Abstract**

A flexible cover (1) is described, for sealing a container against atmospheric agents, comprising a central portion (2) equipped with grip (4) and an external crown (3), capable of being fitted onto an edge of variously sized containers, wherein the central portion (2) is adapted to be deformed by inverting its curvature direction under a concentrated load, and by keeping the same curvature direction under a distributed load. A process for using such flexible cover (1) is also described.

## Description

The present invention relates to a flexible cover sealed against atmospheric agents; such cover is made with an elastic and flexible material, equipped with mechanical characteristics that allow obtaining a high seal against atmospheric agents with respect to a container for foodstuff. The present invention further relates to a process for using such cover.

The prior art deals, in particular, with a flexible cover belonging to the category of kitchen tools and, in general, to containers or products made of plastic obtained through extrusion or from laminates:
- KITCHEN EQUIPMENT; COFFEE MILLS; SPICE MILLS; APPARATUS FOR MAKING BEVERAGES (A47J);
- Lids or covers for rigid or semi-rigid containers (B65D 43/00).

The known prior art deals, in particular, with a flexible cover, capable of changing its own shape from concave to convex due to the effect of the force pressing on an handle overlaying the cover, allowing the passage of part of the air placed in the container through the contact area between cover and container. In a following step, adapted to re-establish the outward-projecting container shape, an offset is created for the pressure operating on the two cover intrados and extrados surfaces, such offset being cancelled when the operator abandons its grip onto the grip, through the contribution of the elastic work of the cover structure.

The thereby-created gasket prevents the exchange of air between internal container environment and outside, creating a temporary, but long protection, of the order of several hours within a day, for foodstuffs.

The gasket effect is the result of squashing the deformable material along the contact area between cover, made of flexible material, and container, generically made of metal or very rigid material.

It is not always possible to establish and keep active the thrust operating on the cover and directed towards the container interior. In fact, it is enough to outflow a minimum amount of air from inside the container through the gasket, to make it difficult to restore the initial concave configuration, configuration without which the necessary force is not created for squashing the gasket in order to realise the barrier effect along the contact circumference between cover and container.

It follows that: a cover made of flexible material that seals against atmospheric agents must be elastic and deformable in order to operate as plunger for expelling the air contained inside the container; at the same time, it must have an adequate stiffness capable of counteracting the windage force which tends to push it towards the container bottom.

This physical contradiction, represented by:
- the capability of performing wide excursions assuming unstable non-linear configurations;
- the capability of performing small distortions under high forces;
is functionally solved with a silicone-based flexible cover comprising a central spherical cap delimited at its periphery by a frustum of cone, said spherical cap changing its shape from projecting to reentering with respect to the container under the action of a concentrated load, keeping its projection outwards when the load becomes of the distributed type.

In this respect, this is a silicone-based flexible cover, the spherical cap being made of a membrane whose thickness is included between about 1 and 3 mm, the frustum of cone being made of a membrane whose thickness is included between about 3 and 5 mm.

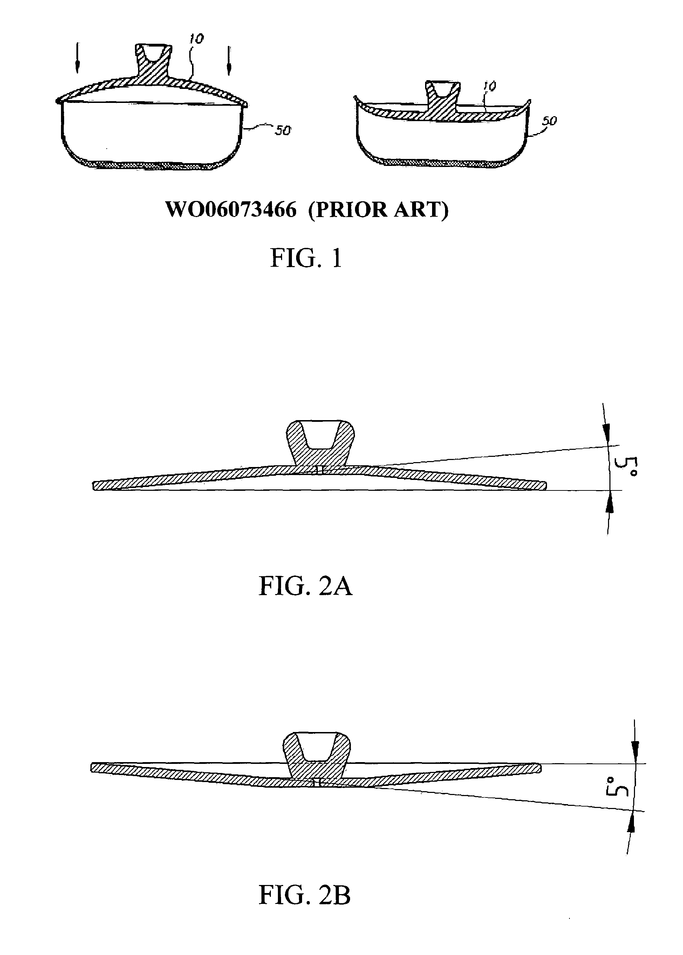

The ideal solution of a sealed flexible cover is shown in Fig. 2A and 2B as a silicone-based flexible cover, the central spherical cap being reduced to the sole bearing base of the central grip or handle, delimited at its periphery by a frustum of cone that is slightly slanted - about 3° and 6° with respect to the horizontal line, said frustum of cone changing its shape from outwards projecting to reentering towards the container bottom under the action of a concentrated load, keeping its outward projecting shape under the action of a distributed load.

Such a cover has the inconvenience of having to provide high thicknesses in order not to incur in static unstability, piercing, etc.

Object of the present invention is solving the above prior art problems, by providing a silicone-based flexible cover comprising a central spherical cap delimited at its periphery by a frustum of cone, the spherical cap being made of a membrane with a thin thickness, the frustum of cone being made of a membrane with a thick thickness.

A further object of the present invention is providing a variation of a silicone-based flexible cover comprising a central spherical cap delimited at its periphery by a frustum of cone, the spherical cap and the frustum of cone being both made of a membrane with a thin thickness, a stiffening edge delimiting the central cap.

The above and other objects of the invention are obtained with a flexible cover and a related process for using it as claimed in the independent claims; preferred embodiments and variations of the invention are the subject matter of the dependent claims.

The present invention will be better understood from the following description of some preferred, but nonlimiting, embodiments thereof, performed with reference to the enclosed figures, in which:
- figure 1 shows the prior art dealing with the arrangement of a deformable cover whose thickness is thin at its periphery, and thick at its centre;
- figures 2A and 2B are front sectional views of an ideal flexible cover;

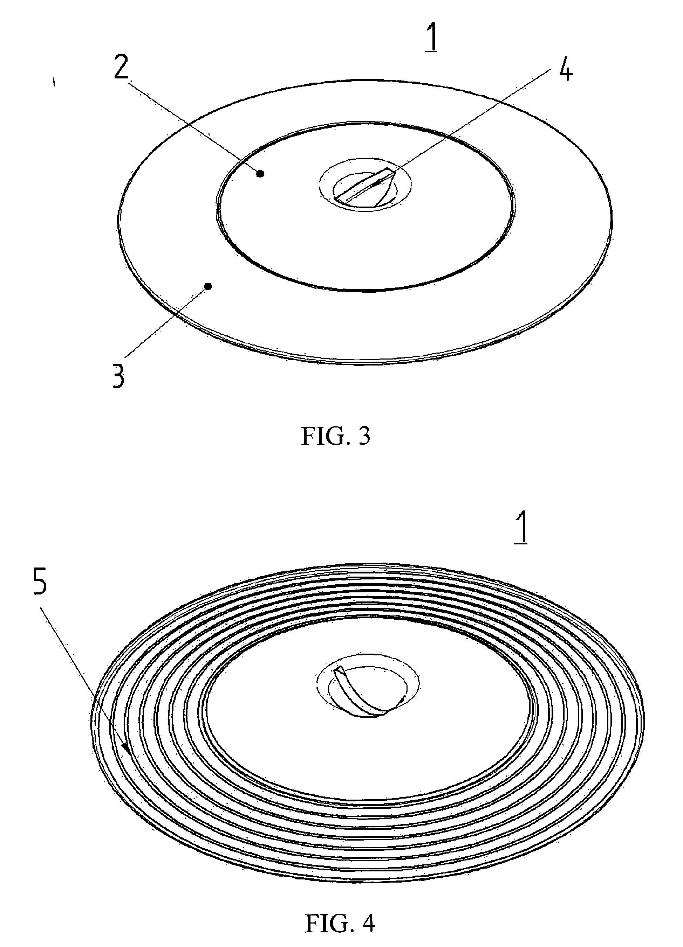

- figure 3 is an axonometric view of the extrados surface of a cover equipped with central cap and frustum of cone at its periphery;
- figure 4 is an axonometric view of the intrados surface of a cover equipped with central cap and frustum of cone at its periphery;

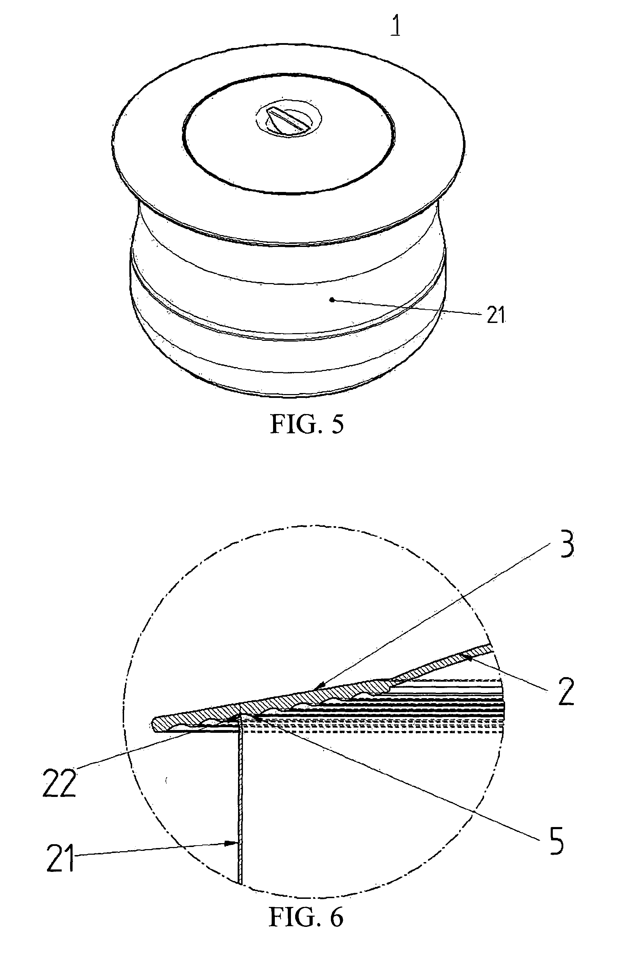

- figure 5 is an axonometric view of the cover and rigid or semi-rigid container assembly;
- figure 6 is a front sectional view of part of the coupling between cover and container;
- figures 7A, 7B and 7C are front sectional views of the cover respectively in the undeformed, deformed under concentrated load, and deformed under distributed load concentrations;

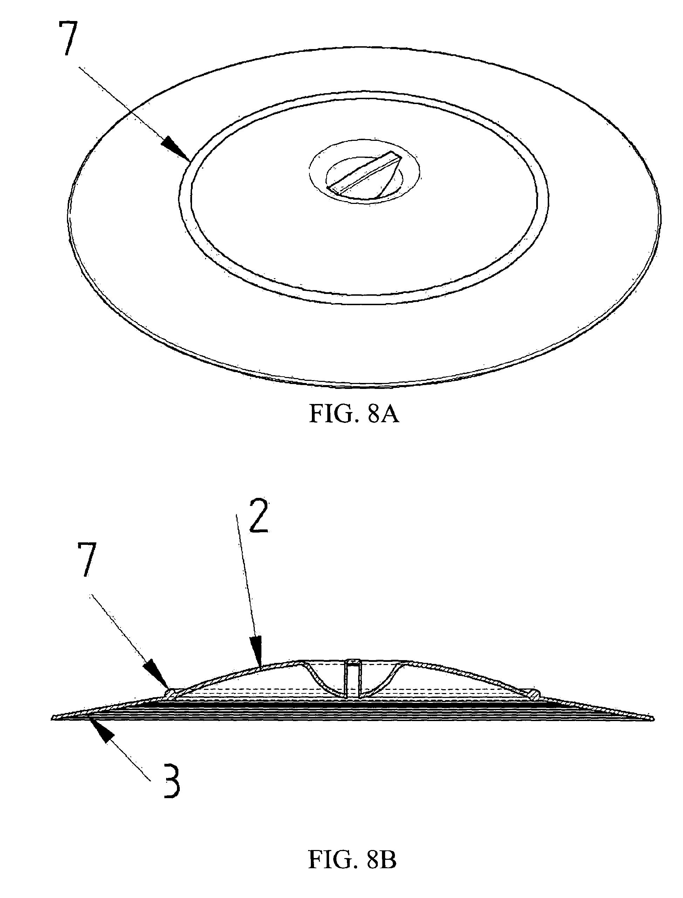

- figures 8A and 8B are axonometric and front sectional views of a variation of a cover comprising a stiffening edge of the central spherical cap.

A flexible cover 1, of the axial symmetrical type, substantially comprises a central spherical cap 2 connected to a frustum of cone 3 arranged at the periphery of the circular cover 1. The frustum of cone 3 has such size as to cover the range of most widely used kitchen containers, whose diameter is included between 180 and 300 mm.

A grip or handle 4 is directly obtained from the spherical cap 2, or is an additional member applied to the spherical cap 2 through connection members like a screw or an undercut dap (not shown).

The frustum of cone 3 is formed of a membrane with thick thickness, included between 3 and 5 mm, which is slanted by about 10° with respect to an horizontal plan.

The central cap 2 is made of a membrane with thin thickness, included between 1 and 3 mm with a curvature with a radius of about 220 mm.

The membrane 3 can be made according to a variation that provides for a thin thickness, of the same order of magnitude of the central spherical cap 2, and suitably increased stiffness.

Cover 1 operation:

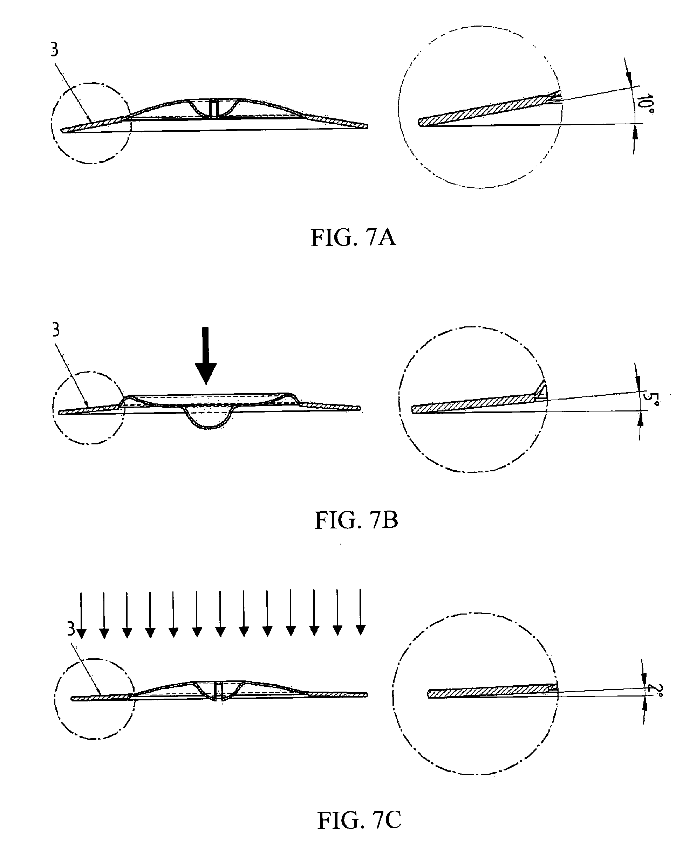

a) FIG. 7A: the cover is abutted onto the upper edge of a rigid container (not shown). In this configuration there is no protection from atmospheric agents.
b) FIG. 7B: the operator, by pressing onto the grip 4 of the cover 1, pushes the cover 1 towards the container bottom (not shown in Fig. 7B). The frustum of cone 3 rotates with respect to the contact point, namely with respect to the edge 22 of the container 21. Due to the effect of the concentrated thrust transmitted by the grip 4, the spherical cap 2 gets deformed, projecting its convexity towards the container 21 interior. Due to the effect of squashing the cover 1, a portion of air contained inside the container passes through the gasket being formed in the contact area of cover 1 and edge 22 of the container 21.
c) the operator pulls the grip 4. The spherical cap 2 returns to its original shape, namely with its projection facing outwards. In spite of the action exerted by the operator that is oriented outwards, the frustum of cone 3 goes on rotating towards the container 21 interior, remaining in its elastic range, having to compensate for the partial vacuum action inside the container 21.
d) FIG. 7C: the operator releases the grip 4. The cover 1 is subjected to the distributed load 2 action, keeping its original shape with its projection oriented towards the container exterior.

The above described cover 1 solves the physical contradiction, described at the beginning of this document, given by its function as plunger that must perform a pumping action of the inside air towards the outside through wide excursions of the cap 2, and given the structural function of having to support the thrust induced by the external pressure without sinking into the container.

The help of guiding grooves 5, obtained in the intrados surface of the frustum of cone 3, solves the problem of centring the cover 1 with respect to the container 21.

An important variation of the flexible cover 1 provides for introducing a stiffening edge 7 of the perimeter of the central cap 2. Due to this edge 7, the central cap 2 restores its own shape with its projection oriented towards the container 21 exterior when it is under the action of a distributed load, namely when the operator releases the grip 4.

This variation allows using a circular crown 3 with a reduced thickness, approximately equal to the central cap 2 thickness.

The flexible cover 1 is preferably made of deformable elastic material, of the type known in the foodstuff field according to directives in force. In particular reference is made to a thermoplastic material, silicone, elastomer; namely: platinic silicone, particularly adapted for freezing at -50°C and cooking at 300°C; peroxide silicone; elastomer adapted for cooking at 300°C and freezing at -50°C.

Thermocolouring pigments, adapted to point out the temperature of the environment in which they are immersed or for pointing out the temperature of the material with which they are in contact, are additional ingredients for the basic material.

Thermoplastic material or elastomers, suitably treated in the vulcanising step (dynamic vulcanising), capable of including and keeping air with the result of obtaining a lightweight and insulating structure, allow realising a flexible cover 1 with better insulation and lightness characteristics.

Thermoplastic material or elastomers, worked in a plate and suitable preformed and assembled with glass cloth, allow realising a flexible cover 1 with high mechanical characteristics of resistance to engraving with cutting objects.

## Claims

1. Flexible cover (1) sealed against atmospheric agents comprising a central portion (2) equipped with grip (4) and an external crown (3), capable of be fitted onto an edge of containers with different sizes, **characterised in that** the central portion (2) is adapted to be deformed differently, by inverting its curvature direction under a concentrated load, and by keeping the same curvature direction under a distributed load.

2. Flexible cover (1) according to claim 1, **characterised in that** the central portion (2) is a spherical cap and the circular crown (3) is a frustum of cone.

3. Flexible cover (1) according to claim 1, **characterised in that** the intrados surface of the circular crown (3) comprises a series of grooves (5) adapted to help centring a container (21) coupled with the cover (1).

4. Flexible cover (1) according to any one of the previous claims, **characterised in that** it has an axial-symmetrical shape.

5. Flexible cover (1) according to claim 1, **characterised in that** the central portion (2) has a mean thickness included between 1 and 3 mm and a radius of curvature of 220 mm.

6. Flexible cover (1) according to claim 1, **characterised in that** the circular crown (3) has a mean thickness included between 3 and 5 mm and a mean slanting of 10° with respect to a horizontal plane.

7. Flexible cover (1) according to claim 1, **characterised in that** the central cap (2) is delimited by a circular sitffening edge (7), allowing to adopt a small thickness for the circular crown (3).

8. Flexible cover (1) according to any one of the previous claims, **characterised in that** it is made of thermoplastic material.

9. Flexible cover (1) according to any one of the previous claims 1 to 8, **characterised in that** it is made of silicone or platinic silicone or peroxide silicone.

10. Flexible cover (1) according to any one of the previous claims 1 to 8, **characterised in that** it is made of elastomer material.

11. Flexible cover (1) according to any one of the previous claims, **characterised in that** it is made of an elastic material adapted for cooking at 300°C and for freezing at -50°C.

12. Flexible cover (1) according to any one of the previous claims, **characterised in that** thermocolouring pigments, adapted to point out the temperature of the environment in which they are immersed or for pointing out the temperature of the material with which they are in contact, are additional ingredients for the basic material.

13. Flexible cover (1) according to any one of the previous claims, **characterised in that** it is adapted to be made by meas of a dynamic vulcanising treatment of the type capable of including and keeping air obtaining a lightweight and insulating structure.

14. Flexible cover (1) according to any one of the previous claims, **characterised in that** it is adapted to be made by joining a membrane composing the elastic material with a glass cloth obtaining a composite structure with high mechanical characteristics of resistance to engraving with cutting objects.

15. Process for forming a seal against atmospheric agents inside a container (21) for foodstuffs through a flexible cover (1) according to claim 1, **characterised in that**, by pressing onto the grip (4) of the cover (1), the central portion (2) is deformed by orienting its projection towards inside the container (21).

16. Process for forming a seal against atmospheric agents according to claim 15, **characterised in that**, by pulling the cover by means of the grip (4), the central portion (2) again reverses the curvature direction towards outside the container (21).

17. Process for forming a seal against atmospheric agents according to claim 16, **characterised in that**, by freeing the grip of the cover, namely by releasing the grip (4), at least the central portion (2) keeps unchanged its curvature direction towards outside the container (21).
